# FASCICULE DE BREVET EUROPEEN

(11) **EP 1 438 771 B1**
(45) Date de publication et mention de la délivrance du brevet: **21.01.2009**
(21) Numéro de dépôt: 02785551.9
(22) Date de dépôt: 16.10.2002
(51) Int. Cl.: H01R 35/02, B60R 16/02, B62D 1/16

(54) **CONTACTEUR ELECTRIQUE TOURNANT ET ENSEMBLE DE DIRECTION DE VEHICULE AUTOMOBILE MUNI DE CE CONTACTEUR**
DREHBARES ELEKTRISCHES VERBINDUNGSELEMENT UND KRAFTFAHRZEUGLENKSÄULENEINHEIT MIT EINEM SOLCHEN VERBINDUNGSELEMENT
ELECTRIC ROTARY CONTACTOR AND MOTOR VEHICLE STEERING ASSEMBLY PROVIDED WITH SAME

(30) Priorité: 17.10.2001 FR 0113383
(43) Date de publication de la demande: 21.07.2004
(73) Titulaire: VALEO ELECTRONIQUE, 94000 Creteil (FR)
(72) Inventeur: MANGE, Jean-Christophe, F-94410 Saint Maurice (FR); MICHELINI, René, F-77170 Servon (FR)
(74) Mandataire: Croonenbroek, Thomas Jakob
(86) Numéro de dépôt international: PCT/FR2002/003545
(87) Numéro de publication internationale: WO 2003/034551

(56) Documents cités:
- FR-A- 2 772 195
- FR-A- 2 773 127
- US-A- 4 660 500
- US-A- 4 917 524
- US-A- 4 966 334
- US-A- 5 917 163

## Description

La présente invention concerne un contacteur électrique tournant et un ensemble de direction de véhicule automobile muni de ce contacteur.

Habituellement, un contacteur électrique tournant pour ensemble de direction de véhicule automobile comprend deux parties coaxiales montées rotatives l'une par rapport à l'autre, dites fixe et mobile. La partie fixe du contacteur est solidaire d'un corps fixe de colonne de direction alors que la partie mobile du contacteur et solidaire en rotation du volant de direction.

Les parties fixe et mobile du contacteur forment un boîtier de forme générale annulaire dans lequel est logé un connecteur souple, ayant couramment un aspect général de ruban. Les deux extrémités du connecteur souple sont reliées électriquement à deux connecteurs rigides portés respectivement par les parties fixe et mobile. Le connecteur souple s'enroule ou se déroule à l'intérieur du boîtier annulaire selon le sens de rotation du volant.

Le contacteur tournant est monté sur la colonne de direction du véhicule préalablement au volant. Lors de ce montage, il convient de s'assurer que la partie mobile du contacteur est placée par rapport à la partie fixe de ce contacteur dans une position prédéterminée autorisant, après le montage du volant, un nombre de tours sensiblement identique dans les deux sens opposés de rotation du volant, sans arracher une extrémité du connecteur souple.

On a donc proposé dans l'état de la technique d'équiper le contacteur tournant d'un organe de blocage, en particulier un levier, destiné à bloquer temporairement la partie mobile par rapport à la partie fixe ou à limiter la course angulaire de la partie mobile par rapport à la partie fixe. Ce levier de blocage permet de maintenir la partie mobile du contacteur dans la position prédéterminée souhaitée par rapport à la partie fixe de ce contacteur, avant le montage du volant. Le levier de blocage s'escamote lors du montage du volant de façon à libérer la partie mobile du contacteur par rapport à la partie fixe de ce contacteur.

On rappellera qu'un levier est une machine simple dont on distingue généralement trois genres.

Un levier est dit du premier genre, ou intermobile, lorsque l'axe d'articulation de ce levier (point d'appui) est placé entre, d'une part, une partie de manoeuvre de ce levier, sur laquelle est appliquée une force de manoeuvre du levier (ou puissance), et, d'autre part, une partie active de ce levier sur laquelle est exercée une force de résistance.

Un levier est dit du deuxième genre, ou interrésistant, lorsque la partie active de ce levier est placée entre l'axe d'articulation et la partie de manoeuvre du levier.

Enfin, un levier est dit du troisième genre, ou interpuissant, lorsque que la partie de manoeuvre de ce levier est placée entre l'axe d'articulation et la partie active de ce levier.

FR-A-2 756 108 (FR-96 14159) et FR-A-2 773 127 (FR-97 16826) décrivent chacun un levier de blocage destiné à bloquer temporairement la partie mobile d'un contacteur tournant par rapport à la partie fixe de ce contacteur. Dans ces documents, le levier de blocage est du premier genre, l'axe d'articulation de ce levier (point d'appui) étant placé entre les deux extrémités du levier formant respectivement les parties de manoeuvre et active. Le levier de blocage, du premier genre, s'étend dans un passage axial traversant les parties fixe et mobile du contacteur. Les débattements des extrémités de manoeuvre et active, autour de l'axe d'articulation, posent des problèmes d'encombrement de ce passage qui est destiné à recevoir un moyeu du volant de direction.

FR-A-2 710 597 (FR-93 11730) décrit également un levier de blocage destiné à bloquer temporairement la partie mobile d'un contacteur tournant par rapport à la partie fixe de ce contacteur. Toutefois, dans ce document, le levier de blocage est du troisième genre, la partie de manoeuvre de ce levier étant placée entre l'axe d'articulation et la partie active de ce levier. Par ailleurs, le levier de blocage est surmoulé avec un organe de la partie mobile du contacteur, l'axe d'articulation étant matérialisé par un amincissement de matière reliant le levier de blocage à l'organe qui le porte.

La cinématique d'un levier de blocage du deuxième ou troisième genre, ne comportant qu'une seule extrémité mobile, évite certains problèmes d'encombrement posés dans le cas d'un levier de blocage du premier genre, comportant deux extrémités mobiles.

Toutefois, le surmoulage du levier de blocage du troisième genre, tel qu'il est proposé par FR-A-2 710 597, n'est pas toujours approprié, notamment dans le cas d'un contacteur tournant relativement complexe du type décrit dans FR-A-2 772 195 (FR-97 15599). En particulier, le surmoulage du levier de blocage peut poser des difficultés d'agencement d'un ressort de rappel de ce levier vers une position de blocage.

US-A-4 966 334 décrit un contacteur électrique tournant, du type comprenant :
- deux parties coaxiales montées rotatives l'une par rapport à l'autre, dites fixe et mobile, ayant une forme générale annulaire délimitant un passage axial traversant ces parties fixe et mobile,
- la partie mobile comprenant un premier organe mobile comportant une jupe axiale de forme générale annulaire, délimitant le passage axial, et
- un levier de blocage, du deuxième ou troisième genre, rapporté sur la partie mobile et muni d'une extrémité articulée autour d'un axe lié à la partie mobile, d'une partie active pour le blocage ou la limitation de la course angulaire de la partie mobile par rapport à la partie fixe et d'une partie d'application d'une force de manoeuvre.

L'invention a notamment pour but de proposer un contacteur tournant muni d'un levier de blocage peu encombrant et simple à agencer.

A cet effet, l'invention a pour objet un contacteur électrique tournant, du type décrit dans US-A-4 966 334, **caractérisé en ce que** l'extrémité d'articulation du levier de blocage a une forme générale cylindrique, matérialisant l'axe d'articulation du levier de blocage, logée dans des paliers ménagés dans la partie mobile, **et en ce que** l'extrémité d'articulation du levier est emboîtée dans des encoches complémentaires ménagées dans la jupe axiale, formant les paliers d'articulation du levier de blocage.

Suivant d'autres caractéristiques de ce contacteur :
- la partie active du levier de blocage forme une extrémité de ce levier destinée à coopérer avec deux butées de blocage solidaires de la partie fixe, espacées angulairement entre elles, pour le blocage ou la limitation de la course angulaire de la partie mobile par rapport à la partie fixe, cette extrémité active du levier étant reliée à la partie de manoeuvre du levier blocage par l'intermédiaire d'une partie d'échappement aux deux butées ;
- la partie d'application de la force de manoeuvre du levier s'étend radialement dans le passage axial ;
- la partie mobile comprend un second organe mobile comportant une joue radiale munie d'une partie de retenue de l'extrémité d'articulation du levier de blocage dans les encoches formant paliers, l'axe d'articulation du levier s'étendant sensiblement parallèlement à la joue radiale ;
- la partie de retenue de la joue radiale comporte au moins une patte déformable élastiquement axialement ;
- le contacteur comprend des moyens de rappel élastique du levier de blocage vers une position de blocage ou de limitation de la course angulaire de la partie mobile par rapport à la partie fixe, ces moyens de rappel élastique étant portés par le levier de blocage ;
- les moyens de rappel élastique comprennent une lame formant ressort munie d'une première extrémité accrochée sur le levier de blocage et d'une seconde extrémité en appui sur la jupe axiale du premier organe mobile ;
- les parties fixe et mobile forment un boîtier de forme générale annulaire dans lequel est logé un connecteur souple muni d'une extrémité fixe reliée à la partie fixe et d'une extrémité mobile reliée à la partie mobile ;
- la partie mobile comprend un rotor d'enroulement du connecteur, logé dans le boîtier annulaire, et un moyeu annulaire d'entraînement de ce rotor ;
- le moyeu et couplé en rotation au rotor par des moyens à engrenage ; la partie fixe comporte un corps annulaire du boîtier et la partie mobile comporte un couvercle annulaire de ce boîtier lié en rotation au moyeu annulaire ;
- les butées de blocage sont portées par une face, externe au boîtier, d'une paroi formant fond du corps de boîtier
- le premier organe mobile forme le moyeu ;
- le second organe mobile forme le couvercle.

L'invention a également pour objet un ensemble de direction de véhicule automobile, caractérisé en ce qu'il comprend un contacteur tel que défini ci-dessus.

L'invention sera mieux comprise à la lecture de la description qui va suivre, donnée uniquement à titre d'exemple et faite en se référant aux dessins dans lesquels :
- la figure 1 est une vue de dessus d'un contacteur électrique tournant pour véhicule automobile selon l'invention ;
- la figure 2 est une vue en perspective éclatée du contacteur illustré sur la figure 1 ;
- les figures 3 et 4 sont des vues en coupe axiale du contacteur illustré sur les figures précédentes, montrant le levier de blocage dans, respectivement, des positions de blocage et de libération de la partie fixe par rapport à la partie mobile du contacteur.

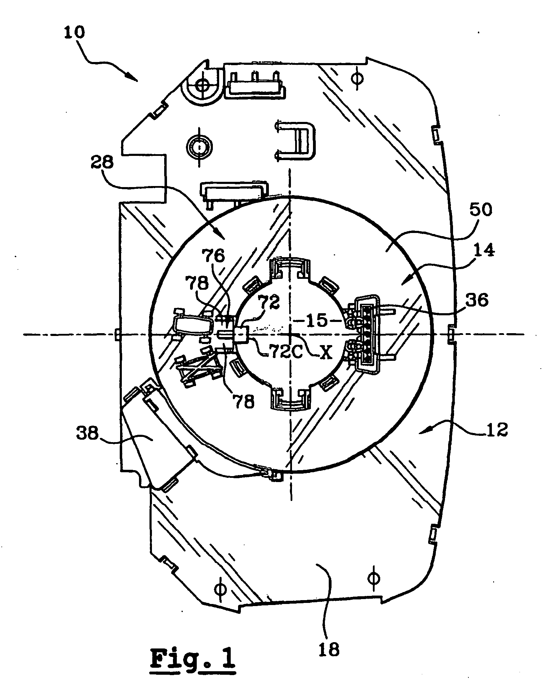

On a représenté sur les figures 1 à 4 un contacteur électrique tournant selon l'invention, désigné par la référence générale 10. Ce contacteur 10 est destiné à être agencé dans un ensemble de direction de véhicule automobile.

Le contacteur électrique 10 comprend deux parties coaxiales montées rotatives l'une par rapport à l'autre, dites fixe 12 et mobile 14. Sur la figure 1, on a désigné par X l'axe de rotation de la partie mobile 14 par rapport à la partie fixe 12.

Les parties fixe 12 et mobile 14 ont une forme générale annulaire délimitant un passage axial 15 traversant ces parties fixe 12 et mobile 14.

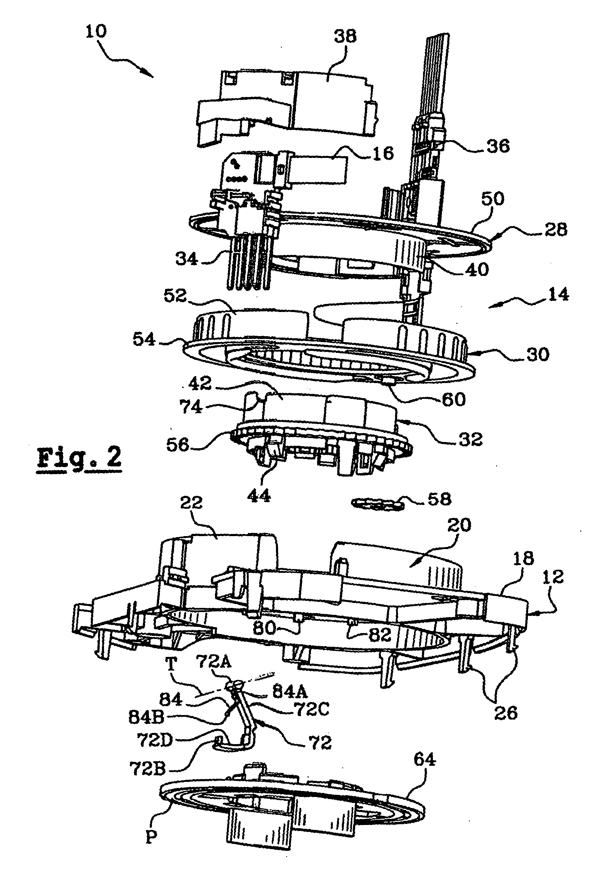

Comme on peut le voir sur les figures 2 à 4, les parties fixe 12 et mobile 14 forment un boîtier B, de forme générale annulaire, dans lequel est logé un connecteur classique souple 16. Ce connecteur 16, en forme générale de ruban surmoulé, est partiellement représenté sur la figure 2.

La partie fixe 12 comprend une semelle 18 sur laquelle est venu de matière un corps 20 de boîtier. Ce corps 20 est délimité par une paroi axiale annulaire 22, interrompue circonférentiellement, et un fond 24 percé axialement.

La semelle 18 est destinée à être accrochée sur un support lié à un corps de colonne de direction (non représenté) à l'aide de moyens classiques comprenant par exemple des pattes d'encliquetage 26 telles que représentées notamment sur la figure 2.

La partie mobile 14 comprend un couvercle annulaire 28 de boîtier, un rotor 30 d'enroulement du connecteur souple 16, logé dans le boîtier annulaire B, et un moyeu annulaire 32 d'entraînement de ce rotor notamment par l'intermédiaire de moyens à engrenage qui seront décrits ultérieurement.

Le connecteur souple 16 comprend une première extrémité reliée à un connecteur rigide fixe classique 34, porté par la partie fixe 12, et une seconde extrémité reliée à un connecteur rigide mobile classique 36, porté par le couvercle 28.

Le connecteur rigide fixe 34 est protégé par un capot 38 accroché de façon connue en soi sur la partie fixe 12 (voir notamment figures 1 et 2).

Le couvercle 28 et le moyeu 32 sont munis de jupes axiales d'emboîtement respectives 40, 42 séparant radialement l'intérieur du boîtier B d'avec le passage axial 15. Les jupes 40, 42 participent à l'entretoisement axial du couvercle 28 et du moyeu 32 ainsi qu'au centrage axial relatif de ces couvercle 28 et moyeu 32.

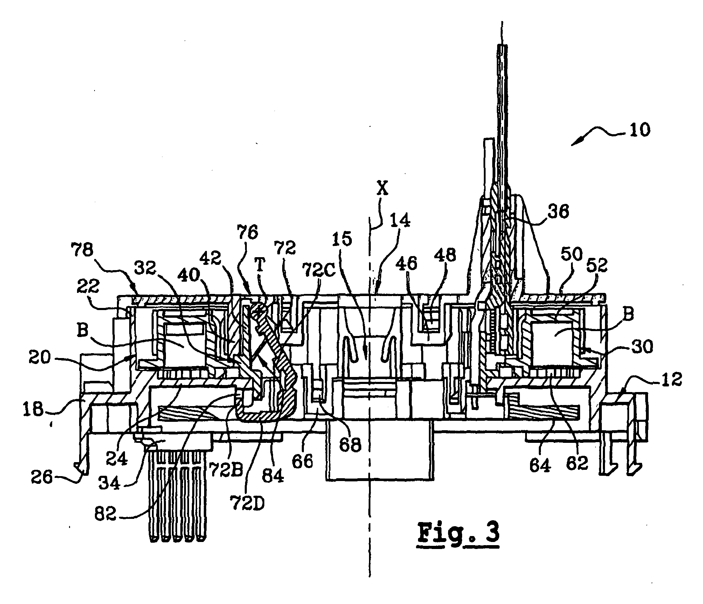

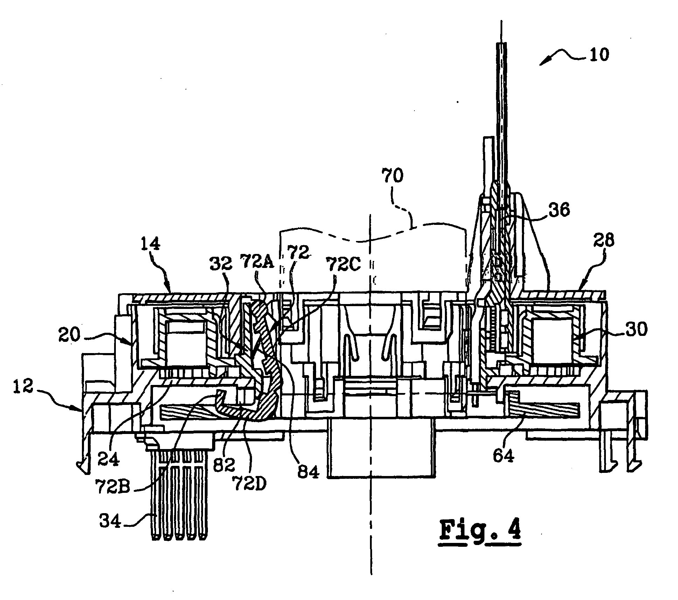

On notera, en se référant aux figures 3 et 4, que la jupe 42 du moyeu 32 forme, pour l'essentiel, une paroi délimitant le passage axial 15.

Le moyeu 32 est monté rotatif sur le fond 24 du corps 20 de boîtier à l'aide de moyens classiques comprenant, par exemple, des pattes axiales 44 d'encliquetage permettant une immobilisation axiale du moyeu 32 par rapport à la semelle 18 tout en autorisant la rotation de ce moyeu 32 par rapport à la semelle 18, autour de l'axe X (voir notamment figure 2).

Le couvercle 28 est accroché sur le moyeu 32 à l'aide de moyens classiques comprenant par exemple des pontets 46 dans lesquels sont emboîtées des pattes axiales 48 d'encliquetage (voir notamment figures 3 et 4).

Le couvercle 28 est muni d'une joue radiale 50, solidaire de la jupe axiale 40, obturant axialement le boîtier B.

Le rotor 30 comporte un noyau annulaire 52 d'enroulement du connecteur souple 16 prolongé par une collerette 54 d'appui du rotor 30 sur le fond 24 du corps de boîtier. On notera que le noyau 52 est interrompu circonférentiellement.

Le moyeu 32 est couplé en rotation au rotor 30 par des moyens classiques à engrenage comprenant notamment, une denture externe 56, portée par le moyeu 32 et un pignon 58 monté rotatif sur un pivot 60 porté par le rotor 30. Le pignon 58, engrenant avec la denture externe 56 et une denture interne 62 ménagée sur la partie fixe 12 (voir figures 3 et 4), forme des moyens à engrenage de type épicycloïdal permettant l'établissement d'un rapport de réduction entre le moyeu 32 et le rotor 30.

Pour plus de détail sur l'enroulement du connecteur souple 16 sur le rotor 30 et le fonctionnement de ce dernier, on se référera utilement à FR-A-2 772 195 dont le contenu est incorporé par référence dans la présente description.

La partie mobile 14 comprend également une platine 64 portant des pistes conductrices électriquement P, destinées par exemple à l'alimentation électrique d'un avertisseur sonore.

La platine 64 est accrochée sur le moyeu 32 à l'aide de moyens classiques comprenant, par exemple, des pontets 66 dans lesquels sont emboîtées des pattes axiales 68 d'encliquetage.

Le moyeu 32 de contacteur est destiné à être couplé en rotation à un moyeu 70 de volant de direction représenté en traits mixtes sur la figure 4.

Le contacteur 10 comporte également un levier de blocage 72, représenté en détail sur la figure 2, muni d'une première extrémité 72A articulée autour d'un axe T lié à la partie mobile 14.

Le levier 72 est rapporté sur la partie mobile 14 du contacteur. Ainsi, on notera que l'extrémité d'articulation 72A a une forme générale cylindrique matérialisant l'axe d'articulation T et qu'elle est emboîtée dans deux encoches complémentaires 74 ménagées dans la jupe axiale 42 du moyeu 32. Ces encoches forment des paliers d'articulation du levier de blocage 72.

L'extrémité d'articulation 72A du levier est retenue dans les encoches 74 par coopération avec une partie de retenue 76 de la joue radiale 50 du couvercle 28 (voir figures 1, 3 et 4). On notera que l'axe d'articulation T s'étend sensiblement parallèlement à la joue radiale 50. On notera également que la partie de retenue 76 comporte au moins une patte 78 déformable élastiquement axialement, de préférence deux pattes 78 comme cela est illustré sur la figure 1, de façon à permettre la retenue de l'extrémité d'articulation 72A dans les encoches 74 par pincement de cette extrémité 72A entre ces encoches 74 et les pattes 78.

Le levier de blocage 72 est du deuxième ou troisième genre. En effet, sa première extrémité 72A est immobile par rapport à l'axe d'articulation T alors que sa seconde extrémité 72B est mobile par rapport à cet axe T.

Dans l'exemple illustré, le levier de blocage 72 est du troisième genre et a une forme générale de crochet recourbé radialement vers l'extérieur. Ainsi, le levier 72 comporte une partie de manoeuvre 72C, sur laquelle une force de manoeuvre du levier est destinée à être appliquée, intercalée entre sa première extrémité d'articulation 72A et sa seconde extrémité 72B formant une partie active du levier.

L'extrémité active 72B du levier est destinée au blocage ou à la limitation de la course angulaire de la partie mobile 14 par rapport à la partie fixe 12 du contacteur 10.

L'extrémité active 72B du levier est destinée à coopérer avec deux butées de blocage 80, 82, solidaires de la partie fixe 12, pour le blocage ou la limitation de la course angulaire de la partie mobile 14 par rapport à la partie fixe 12 du contacteur. De préférence, les butées de blocage 80, 82 sont espacées angulairement entre elles de façon à autoriser un jeu angulaire entre les parties fixe 12 et mobile 14.

Dans l'exemple illustré, les butées de blocage 80, 82 sont portées par une face, externe au boîtier B, délimitant le fond 24 du corps de boîtier.

Le levier de blocage 72 est déplaçable, autour de l'axe T, entre une portion active, telle que représentée sur la figure 3, dans laquelle l'extrémité active 72B du levier est intercalée angulairement entre les butées 80, 82 de façon à limiter la course angulaire relative des parties mobile 14 et fixe 12, et une position escamotée, telle que représentée sur la figure 4, dans laquelle l'extrémité active 728 du levier est décalée radialement vers l'extérieur par rapport aux butées de blocage 80, 82.

On notera que l'extrémité active 72B du levier est reliée à la partie de manoeuvre 72C de ce levier par l'intermédiaire d'une partie 72D d'échappement aux deux butées 80, 82.

On notera également que la partie de manoeuvre 72C du levier forme une rampe s'étendant radialement dans le passage axial 15.

Le levier de blocage 72 est rappelé élastiquement vers sa position active de limitation de la course angulaire relative des parties fixe 12 et mobile 14 par l'intermédiaire de moyens de rappel élastique portés par ce levier 72.

De préférence, ces moyens de rappel élastique comprennent une lame 84, formant ressort, munis d'une première extrémité 84A accrochée sur le levier de blocage 72, par exemple par bouterollage, et une seconde extrémité 848 en appui sur la surface radialement interne de la jupe 42 du moyeu (voir figures 2 à 4).

On précisera ci-dessous les principaux aspects du fonctionnement du contacteur électrique tournant 10 liés à l'invention.

Initialement, le contacteur 10 est monté sur un corps de colonne de direction, préalablement au montage du volant de direction.

La semelle 18 est solidaire du corps de colonne.

Le levier de blocage 72 est dans sa position active, telle que représentée sur la figure 3. Le levier de blocage 72 est maintenu en appui contre des butées classiques de positionnement de ce levier en position active, sous l'effet de rappel du ressort 84. L'extrémité active 72B du levier 72 est intercalée angulairement entre les deux butées de blocage 80, 82. La partie mobile 14 est dans une position angulaire prédéterminée par rapport à la partie fixe 12 (au jeu angulaire près) de façon à autoriser, après montage du volant, un nombre de tours sensiblement identique dans les deux sens opposés de rotation du volant, sans arracher une extrémité du connecteur souple 16.

Lors du montage du volant de direction, le moyeu 70 de ce dernier est introduit, au moins partiellement, dans le passage axial 15, comme cela est représenté sur la figure 4.

Le moyeu 70 de volant coopère avec la partie de manoeuvre 72C du levier de façon à faire pivoter ce levier 72, autour de l'axe T, à l'encontre de la force de rappel du ressort 84.

Ceci a pour effet de décaler radialement l'extrémité active 728 du levier par rapport aux butées de blocage 80, 82 et d'autoriser la libre rotation de la partie mobile 14 par rapport à la partie fixe 12 du contacteur.

Parmi les avantages de l'invention, on notera que celle-ci permet d'équiper un contacteur tournant avec un levier de blocage du deuxième ou troisième genre, donc peu encombrant, ce levier étant simple à agencer. En effet, le ressort 84 de rappel du levier de blocage 72 est de préférence accroché sur ce levier 72 préalablement à son montage dans le contacteur tournant. De plus, le levier de blocage 72 peut être facilement articulé sur la partie mobile 14 d'un contacteur tournant du type décrit dans FR-A-2 772 195, ceci sans modifier notablement les organes du contacteur classique.

L'escamotage du levier de blocage 72 se fait automatiquement, lors de l'introduction du moyeu 70 de volant dans le passage axial du contacteur, ceci sans provoquer de rupture d'un quelconque organe du contacteur.

## Revendications

1. Contacteur électrique tournant, du type comprenant :
- deux parties coaxiales montées rotatives l'une par rapport à l'autre, dites fixe (12) et mobile (14), ayant une forme générale annulaire délimitant un passage axial (15) traversant ces parties fixe et mobile,
- la partie mobile (14) comprenant un premier organe mobile (32) comportant une jupe axiale (42) de forme générale annulaire, délimitant le passage axial (15), et
- un levier de blocage (72), du deuxième ou troisième genre, rapporté sur la partie mobile et muni d'une extrémité (72A) articulée autour d'un axe (T) lié à la partie mobile (14), d'une partie active (72B) pour le blocage ou la limitation de la course angulaire de la partie mobile (14) par rapport à la partie fixe (12) et d'une partie (72C) d'application d'une force de manoeuvre,
**caractérisé en ce que** l'extrémité (72A) d'articulation du levier de blocage a une forme générale cylindrique, matérialisant l'axe (T) d'articulation du levier de blocage, logée dans des paliers (74) ménagés dans la partie mobile (14), et
**en ce que** l'extrémité d'articulation (72A) du levier est emboîtée dans des encoches (74) complémentaires ménagées dans la jupe axiale (42), formant les paliers d'articulation du levier de blocage.

2. Contacteur selon la revendication 1, **caractérisé en ce que** la partie active (72B) du levier de blocage forme une extrémité de ce levier destinée à coopérer avec deux butées de blocage (80, 82) solidaires de la partie fixe (12), espacées angulairement entre elles, pour le blocage ou la limitation de la course angulaire de la partie mobile (14) par rapport à la partie fixe (12), cette extrémité active (72B) du levier étant reliée à la partie de manoeuvre (72C) du levier de blocage par l'intermédiaire d'une partie (72D) d'échappement aux deux butées (80, 82).

3. Contacteur selon la revendication 1 ou 2, **caractérisé en ce que** la partie d'application de la force de manoeuvre (72C) du levier s'étend radialement dans le passage axial (15).

4. Contacteur selon l'une quelconque des revendications 1 à 3, **caractérisé en ce que** la partie mobile comprend un second organe mobile (28) comportant une joue radiale (50) munie d'une partie (76) de retenue de l'extrémité d'articulation (72A) du levier de blocage dans les encoches (74) formant paliers, l'axe (T) d'articulation du levier s'étendant sensiblement parallèlement à la joue radiale (50).

5. Contacteur selon la revendication 4, **caractérisé en ce que** la partie (76) de retenue de la joue radiale comporte au moins une patte (78) déformable élastiquement axialement.

6. Contacteur selon l'une quelconque des revendications précédentes, **caractérisé en ce qu'**il comprend des moyens (84) de rappel élastique du levier de blocage (72) vers une position de blocage ou de limitation de la course angulaire de la partie mobile (14) par rapport à la partie fixe (12), ces moyens (84) de rappel élastique étant portés par le levier de blocage (72).

7. Contacteur selon la revendications 6, **caractérisé en ce que** les moyens de rappel élastique comprennent une lame (84) formant ressort munie d'une première extrémité (84A) accrochée sur le levier de blocage et d'une seconde extrémité (84B) en appui sur la jupe axiale (42) du premier organe mobile (32).

8. Contacteur selon l'une quelconque des revendications précédentes, **caractérisé en ce que** les parties fixe (12) et mobile (14) forment un boîtier (B) de forme générale annulaire dans lequel est logé un connecteur souple (16) muni d'une extrémité fixe reliée à la partie fixe (12) et d'une extrémité mobile reliée à la partie mobile (14).

9. Contacteur selon la revendication 8, **caractérisé ce que** la partie mobile comprend un rotor (30) d'enroulement du connecteur (16), logé dans le boîtier annulaire (B), et un moyeu annulaire (32) d'entraînement de ce rotor (30).

10. Contacteur selon la revendication 9, **caractérisé en ce que** le moyeu (32) est couplé en rotation au rotor (30) par des moyens (56, 58, 62) à engrenage.

11. Contacteur selon la revendication 9 ou 10, **caractérisé en ce que** la partie fixe (12) comporte un corps annulaire (20) du boîtier et la partie mobile (14) comporte un couvercle annulaire (28) de ce boîtier lié en rotation au moyeu annulaire (32).

12. Contacteur selon les revendications 2 et 11 prises ensemble, **caractérisé en ce que** les butées de blocage (80, 82) sont portées par une face, externe au boîtier, d'une paroi formant fond (24) du corps de boîtier.

13. Contacteur selon la revendication 11 ou 12, **caractérisé en ce que** le premier organe mobile forme le moyeu (32).

14. Contacteur selon les revendications 4 et 11 prises ensemble, **caractérisé en ce que** le second organe mobile forme le couvercle (28).

15. Ensemble de direction de véhicule automobile, **caractérisé en ce qu'**il comprend un contacteur (10) selon l'une quelconque des revendications précédentes.

## Claims

1. Rotary switch, of the type comprising:
- two coaxial parts mounted rotatably with respect to each other, referred to as the fixed part (12) and moving part (14), having a generally annular shape which delimits an axial passage (15) through these fixed and moving parts,
- the moving part (14) comprising a first moving member (32) having an axial skirt (42) of generally annular shape which delimits the axial passage (15), and
- a locking lever (72), of the second or third class, fitted on the moving part and having an end (72A) pivoting about a shaft (T) connected to the moving part (14), an active part (72B) for locking or limiting the angular travel of the moving part (14) with respect to the fixed part (12), and a part (72C) for the application of an operating force,
**characterized in that** the pivot end (72A) of the locking lever is of generally cylindrical shape, forming the pivot shaft (T) of the locking lever, which is housed in bearings (74) formed in the moving part (14), and
**in that** the pivot end (72A) of the lever is fitted into complementary notches (74) provided in the axial skirt (42), forming bearings for the pivoting of the locking lever.

2. Switch according to Claim 1, **characterized in that** the active part (72B) of the locking lever forms an end of this lever designed to interact with two locking stops (80, 82) which are integral with the fixed part (12) and which have an angular interval between them, for blocking or limiting the angular travel of the moving part (14) with respect to the fixed part (12), this active end (72B) of the lever being connected to the operating part (72C) of the locking lever via a part (72D) for release from the two stops (80, 82).

3. Switch according to Claim 1 or 2, **characterized in that** the part for applying the operating force of the lever (72C) extends radially in the axial passage (15).

4. Switch according to any one of Claims 1 to 3, **characterized in that** the moving part comprises a second moving member (28) having a radial cheek (50) provided with a part (76) for retaining the pivot end (72A) of the locking lever in the notches (74) forming bearings, the pivot shaft (T) of the lever extending substantially parallel to the radial cheek (50).

5. Switch according to Claim 4, **characterized in that** the part (76) for retaining the radial cheek has at least one lug (78) which can be deformed axially and resiliently.

6. Switch according to any one of the preceding claims, **characterized in that** it comprises means (84) for resiliently returning the locking lever (72) towards a position for locking or limiting the angular travel of the moving part (14) with respect to the fixed part (12), these resilient return means (84) being carried by the locking lever (72).

7. Switch according to Claim 6, **characterized in that** the resilient return means comprise a blade (84) forming a spring, having a first end (84A) attached to the locking lever and a second end (84B) bearing on the axial skirt (42) of the first moving part (32).

8. Switch according to any one of the preceding claims, **characterized in that** the fixed (12) and moving (14) parts form a casing (B) of generally annular shape which houses a flexible connector (16) having a fixed end connected to the fixed part (12) and a moving end connected to the moving part (14).

9. Switch according to Claim 8, **characterized in that** the moving part comprises a rotor (30) for winding up the connector (16), housed in the annular casing (B), and an annular hub (32) for driving this rotor (30).

10. Switch according to Claim 9, **characterized in that** the hub (32) is coupled in rotation to the rotor (30) by gear means (56, 58, 62).

11. Switch according to Claim 9 or 10, **characterized in that** the fixed part (12) has an annular body (20) of the casing and the moving part (14) has an annular cover (28) of this casing, fixed with respect to rotation to the annular hub (32).

12. Switch according to Claims 2 and 11 considered in combination, **characterized in that** the locking stops (80, 82) are carried by one face, outside the casing, of a wall forming the end (24) of the body of the casing.

13. Switch according to Claim 11 or 12, **characterized in that** the first moving member forms the hub (32).

14. Switch according to Claims 4 and 11 considered in combination, **characterized in that** the second moving member forms the cover (28).

15. Steering assembly for a motor vehicle, **characterized in that** it comprises a switch (10) according to any one of the preceding claims.

## Patentansprüche

1. Elektrisches Drehschütz von dem Typ, der aufweist:
- zwei zueinander drehbar montierte, koaxiale Teile, ein so genannter fester (12) und ein beweglicher Teil (14), die eine allgemeine Ringform haben, welche einen axialen Durchgang (15) begrenzt, der diese festen und beweglichen Teile durchquert,
- wobei der bewegliche Teil (14) ein erstes bewegliches Organ (32) enthält, das eine axiale Schürze (42) von allgemeiner Ringform aufweist, die den axialen Durchgang (15) begrenzt, und
- einen Blockierhebel (72) der zweiten oder dritten Art, der in den beweglichen Teil eingesetzt und mit einem Ende (72A), das um eine mit dem beweglichen Teil (14) verbundene Achse (T) angelenkt ist, mit einem aktiven Teil (72B) zur Blockierung oder zur Begrenzung des Winkelhubs des beweglichen Teils (14) bezüglich des festen Teils (12) und mit einem Teil (72C) zur Anwendung einer Betätigungskraft versehen ist,
**dadurch gekennzeichnet, dass** das Gelenkende (72A) des Blockierhebels eine die Gelenkachse (T) des Blockierhebels realisierende, allgemein zylindrische Form hat, die in im beweglichen Teil (14) angeordneten Lagern (74) untergebracht ist, und
dass das Gelenkende (72A) des Hebels in in der axialen Schürze (42) ausgebildete komplementäre Aussparungen (74) eingepasst ist, die die Gelenklager des Blockierhebels bilden.

2. Schütz nach Anspruch 1, **dadurch gekennzeichnet, dass** der aktive Teil (72B) des Blockierhebels ein Ende dieses Hebels bildet, das dazu bestimmt ist, mit zwei fest mit dem festen Teil (12) verbundenen, einen Winkelabstand zueinander aufweisenden Blockieranschlägen (80, 82) für die Blockierung oder die Begrenzung des Winkelhubs des beweglichen Teils (14) bezüglich des festen Teils (12) zusammenzuwirken, wobei dieses aktive Ende (72B) des Hebels mit dem Betätigungsteil (72C) des Blockierhebels über einen aus den zwei Anschlägen (80, 82) austretenden Teil (72D) verbunden ist.

3. Schütz nach Anspruch 1 oder 2, **dadurch gekennzeichnet, dass** der Teil (72C) zur Anwendung der Betätigungskraft des Hebels sich radial im axialen Durchgang (15) erstreckt.

4. Schütz nach einem der Ansprüche 1 bis 3, **dadurch gekennzeichnet, dass** der bewegliche Teil ein zweites bewegliches Organ (28) enthält, das eine radiale Wange (50) aufweist, die mit einem Teil (76) zum Halt des Gelenkendes (72A) des Blockierhebels in den Lager bildenden Aussparungen (74) versehen ist, wobei die Gelenkachse (T) des Hebels sich im Wesentlichen parallel zur radialen Wange (50) erstreckt.

5. Schütz nach Anspruch 4, **dadurch gekennzeichnet, dass** der Halteteil (76) der radialen Wange mindestens eine axial elastisch verformbare Lasche (78) aufweist.

6. Schütz nach einem der vorhergehenden Ansprüche, **dadurch gekennzeichnet, dass** es Mittel (84) zur elastischen Rückstellung des Blockierhebels (72) in eine Stellung der Blockierung oder der Begrenzung des Winkelhubs des beweglichen Teils (14) bezüglich des festen Teils (12) aufweist, wobei diese elastischen Rückstellmittel (84) vom Blockierhebel (72) getragen werden.

7. Schütz nach Anspruch 6, **dadurch gekennzeichnet, dass** die elastischen Rückstellmittel eine eine Feder bildende Lamelle (84) aufweisen, die mit einem ersten Ende (84A), das am Blockierhebel festgehakt ist, und mit einem zweiten Ende (84B) versehen ist, das auf der axialen Schürze (42) des ersten beweglichen Organs (32) aufliegt.

8. Schütz nach einem der vorhergehenden Ansprüche, **dadurch gekennzeichnet, dass** die festen (12) und beweglichen (14) Teile ein Gehäuse (B) von allgemeiner Ringform bilden, in dem ein geschmeidiger Verbinder (16) angeordnet ist, der mit einem mit dem festen Teil (12) verbundenen festen Ende und mit einem mit dem beweglichen Teil (14) verbundenen beweglichen Ende versehen ist.

9. Schütz nach Anspruch 8, **dadurch gekennzeichnet, dass** der bewegliche Teil einen Rotor (30) zum Aufwickeln des Verbinders (16), der in dem ringförmigen Gehäuse (B) angeordnet ist, und eine Ringnabe (32) zum Antrieb dieses Rotors (30) aufweist.

10. Schütz nach Anspruch 9, **dadurch gekennzeichnet, dass** die Nabe (32) durch Zahnradmittel (56, 58, 62) mit dem Rotor (30) drehgekoppelt ist.

11. Schütz nach Anspruch 9 oder 10, **dadurch gekennzeichnet, dass** der feste Teil (12) einen ringförmigen Körper (20) des Gehäuses aufweist, und der bewegliche Teil (14) einen ringförmigen Deckel (28) dieses Gehäuses aufweist, der mit der Ringnabe (32) drehverbunden ist.

12. Schütz nach den Ansprüchen 2 und 11 zusammengenommen, **dadurch gekennzeichnet, dass** die Blockieranschläge (80, 82) von einer außerhalb des Gehäuses liegenden Fläche einer einen Boden (24) des Gehäusekörpers bildenden Wand getragen werden.

13. Schütz nach Anspruch 11 oder 12, **dadurch gekennzeichnet, dass** das erste bewegliche Organ die Nabe (32) bildet.

14. Schütz nach den Ansprüchen 4 und 11 zusammengenommen, **dadurch gekennzeichnet, dass** das zweite bewegliche Organ den Deckel (28) bildet.

15. Kraftfahrzeuglenkeinheit, **dadurch gekennzeichnet, dass** sie ein Schütz (10) nach einem der vorhergehenden Ansprüche aufweist.
